# EUROPEAN PATENT APPLICATION

(11) **EP 4 562 994 A1**
(43) Date of publication of application: **04.06.2025**
(21) Application number: 24211634.1
(22) Date of filing: 08.11.2024
(51) Int. Cl.: A01D 34/00, G01S 7/41

(54) **ENHANCED SURFACE DETECTION FOR A ROBOTIC LAWNMOWER**

(30) Priority: 01.12.2023 SE 2351378
(71) Applicant: Husqvarna AB, 561 82 Huskvarna (SE)
(72) Inventor: Gomér, Dan, Huskvarna (SE); Hammarström, Martin, Huskvarna (SE)

(57) **Abstract**

The present disclosure relates to a computer-implemented method for providing at least two surface type detection models and is adapted to provide classifications regarding surface properties for a robotic lawnmower (100) comprising at least two drive wheels (131, 132) that are driven at corresponding drive wheel velocities (v_{1A}, v_{2A}; v_{1B}, v_{2B}), constituting a set of drive wheel rotational velocities (v_{1A}, v_{2A}; v_{1B}, v_{2B}). The method comprising, for at least two different sets of drive wheel rotational velocities (v_{1A}, v_{2A}; v_{1B}, v_{2B}), obtaining (S100) radar detections (182) related to a surface (G) on which the robotic lawnmower (100) is intended to travel, and obtaining (S200) a set of drive wheel rotational velocities (v_{1A}, v_{2A}; v_{1B}, v_{2B}). The method further comprises associating (S300) the radar detections (182) for the obtained set of drive wheel rotational velocities (v_{1A}, v_{2A}; v_{1B}, v_{2B}) with a certain type of surface; and training (S400) a surface type detection model in a neural network using the associated radar detections (182) for the obtained set of drive wheel rotational velocities (v_{1A}, v_{2A}; v_{1B}, v_{2B}). At least two surface type detection models are trained in the neural network, each surface type detection model being associated with a corresponding set of drive wheel rotational velocities (v_{1A}, v_{2A}; v_{1B}, v_{2B}).

## Description

### TECHNICAL FIELD

The present disclosure relates to a computer-implemented method for providing at least two separate machine learning models, where each machine learning model constitutes a surface type detection model and is adapted to provide classifications regarding surface properties for a robotic lawnmower.

### BACKGROUND

Robotic work tools such as for example robotic lawnmowers are becoming increasingly more popular. In a typical deployment work area, such as a garden, the work area is enclosed by a boundary wire with the purpose of keeping the robotic lawnmower inside the work area. An electric control signal may be transmitted through the boundary wire thereby generating an (electro-) magnetic field emanating from the boundary wire. The robotic lawnmower is typically arranged with one or more sensors adapted to sense the control signal.

Alternatively, or as a supplement, the robotic lawnmower can be equipped with a navigation system that is adapted for satellite navigation as well as navigation by means of a local base station. The robotic lawnmower may further comprise other sensors, for example one or more environment detection sensors such as radar, Lidar and ultrasonic sensors, and one or more collision detection sensors.

The robotic lawnmower is adapted to cut grass on a user's lawn automatically and can be charged automatically via charging skids at a charging station and/or by means of solar cells without intervention of the user, and does normally not need to be manually managed after being set once. The robotic lawnmower may need to have a function of detecting obstacles to avoid colliding with an obstacle before encountering the obstacle, and to have a function of recognizing that a collision has occurred.

It has been proposed to use a radar transceiver to obtain a classification of a surface type of the surface on which the robotic lawnmower travels based on reflection data provided by the radar transceiver, in particular the presence of grass, see for example WO 2020153899 A1 and EP 3794922 A1. Being able to determine of a surface type of the surface on which the robotic lawnmower travels, in particular whether there is a presence of grass ahead of the robotic lawnmower, means that the need for boundary wire and navigation systems can be alleviated.

It is therefore desired to provide means for an efficient and reliable detection of which type of surface on which a robotic lawnmower travels irrespective of the present circumstances.

### SUMMARY

The object of the present disclosure is to provide means for an efficient and reliable detection of which type of surface on which a robotic lawnmower travels irrespective of the present circumstances.

This object is achieved by means of a computer-implemented method for providing at least two separate machine learning models, where each machine learning model constitutes a surface type detection model and is adapted to provide classifications regarding surface properties for a robotic lawnmower. The robotic lawnmower comprises at least two drive wheels that are drivably connected to a drive motor arrangement that is used for driving the drive wheels at corresponding drive wheel velocities, constituting a set of drive wheel rotational velocities. The method comprising, for at least two different sets of drive wheel rotational velocities, obtaining radar detections related to a surface on which the robotic lawnmower is intended to travel, and obtaining a set of drive wheel rotational velocities, associating the radar detections for the obtained set of drive wheel rotational velocities with a certain type of surface; and training a surface type detection model in a neural network using the associated radar detections for the obtained set of drive wheel rotational velocities. This way, at least two surface type detection models are trained in the neural network, each surface type detection model being associated with a corresponding set of drive wheel rotational velocities.

This means that several separate machine learning models in the form of surface type detection models are produced, one for each set of drive wheel rotational velocities. This way, surface type detection can be performed by using an appropriate surface type detection model for a present set of drive wheel rotational velocities. This also means that surface type detection can be performed for different sets of drive wheel rotational velocities, which implies different robotic lawnmower speeds and turning angles, including the robotic lawnmower turning on the spot, performing a rotation.

By having several different surface type detection models, one for each set of drive wheel rotational velocities, instead of one surface type detection model for all sets of drive wheel rotational velocities, a higher degree of efficiency is obtained, the required computing resources needed being reduced. One such model easily becomes large in terms of model parameters and computational complexity which does not permit to run it effectively on a relatively uncomplicated MCU where memory and computational power resources are limited.

According to some aspects, the method comprises, for the at least two different sets of drive wheel rotational velocities, obtaining a corresponding steering angle relative a forward travelling direction by detecting the respective rotational velocity of the drive wheels in each set of the sets of drive wheel rotational velocities. This means that the present steering angle can be included in each surface type detection model, providing an enhanced degree of reliability.

According to some aspects, each surface type detection model is adapted to provide classifications regarding at least a type of surface that is grass, and another type of surface that is non-grass. According to some further aspects, each surface type detection model is adapted to provide classifications regarding at least a type of surface that is grass of at least two different length categories. This means that the surface type detection models can provide classifications regarding many types of surfaces and grass properties.

According to some aspects, the surface type detection model is adapted to provide classifications regarding the type of travelling surface ahead of a robotic lawnmower. In this way, decisions can be made regarding actions such as for example adjusting speed, cutting height and turning angles.

This object is also achieved by means of a computer-implemented method for determining a type of travelling surface ahead of a robotic lawnmower, where the robotic lawnmower comprises at least two drive wheels that are drivably connected to a drive motor arrangement that is used for driving the drive wheels at corresponding drive wheel velocities, constituting a set of drive wheel rotational velocities. The method comprises obtaining a set of drive wheel rotational velocities choosing that trained surface type detection model, trained in accordance with the computer-implemented method according to the above, that provides a best match to the obtained set of drive wheel rotational velocities, obtaining radar detections related to the travelling surface ahead of the robotic lawnmower. The computer-implemented method further comprises implementing the chosen surface type detection model by using the obtained radar detections, and outputting a predicted type of travelling surface ahead of a robotic lawnmower.

In this way, the most suitable surface type detection model is used with respect to the current drive wheel velocities. The robotic lawnmower can move at different speeds and directions, and even turn on the spot, while the type of travelling surface around the robotic lawnmower is provided.

This object is also achieved by means of control unit arrangements, robotic lawnmowers and computer program products which are associated with the above advantages.

### BRIEF DESCRIPTION OF THE DRAWINGS

The present disclosure will now be described more in detail with reference to the appended drawings, where:
- Figure 1: shows a schematic perspective side view of a robotic lawnmower;
- Figure 2A: shows a schematic overview of the robotic lawnmower;
- Figure 2B: shows a schematic perspective view of drive wheels with a drive motor arrangement;
- Figure 3: shows a schematic top view of a robotic lawnmower;
- Figure 4: shows a schematic detail side view of a radar transceiver in the robotic lawnmower;
- Figure 5: shows a computer program product; and
- Figure 6-7: show flow charts illustrating methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

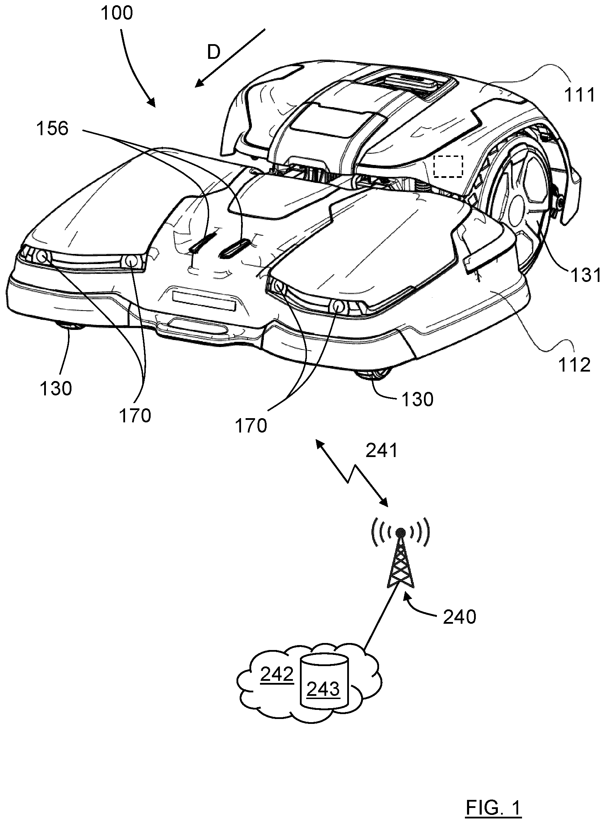

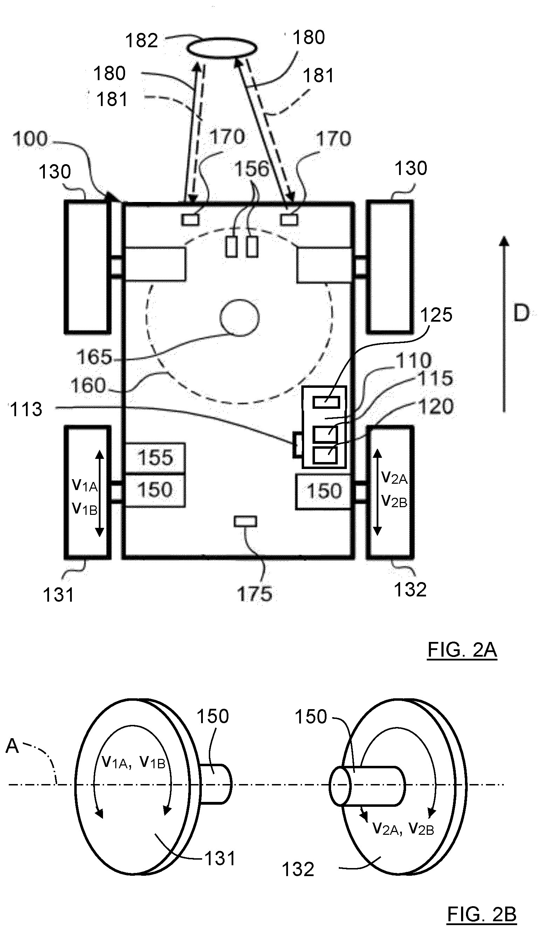

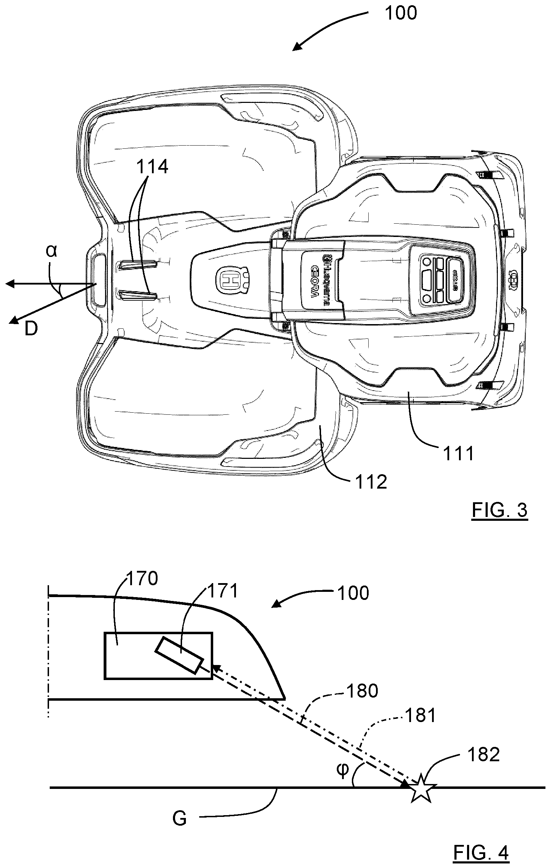

Figure 1 shows a perspective view of an example of a robotic lawnmower 100, Figure 2A shows a schematic overview of the robotic lawnmower 100, Figure 2B shows a schematic representation of two drive wheels 131, 132 of the robotic lawnmower 100, and Figure 3 shows a top view of the robotic lawnmower 100. The robotic lawnmower 100 according to the example is adapted for a forward travelling direction D, has a body 111, 112 and a plurality of wheels 130, 131, 132; in this example the robotic lawnmower 100 has four wheels, two front wheels 130 and two rear wheels 131, 132 which also are drive wheels 131, 132. The robotic lawnmower 100 comprises a control unit arrangement 110 and at least one electric motor 150 that constitutes a drive motor arrangement 150, where at least some of the wheels 131, 132 are drivably connected to at least one electric motor 150 of the drive motor arrangement 150.

It should be noted that even if the description herein is focused on electric motors, combustion engines may alternatively be used in combination with an electric motor arrangement.

The robotic lawnmower 100 may be a multi-chassis type or a mono-chassis type. A multi-chassis type comprises more than one body parts that are movable with respect to one another. A mono-chassis type comprises only one main body part. In this example embodiment, the robotic lawnmower 100 is of a multi-chassis type, having a first body part 111 and a second body part 112, which body parts 111, 112 substantially house all components of the robotic lawnmower 100.

The robotic lawnmower 100 also comprises a grass cutting device 160, such as a rotating blade 160 driven by a cutter motor 165. The robotic lawnmower 100 also has at least one rechargeable electric power source such as a battery 155 for providing power to the drive motor arrangement 150 and/or the cutter motor 165. The battery 155 is arranged to be charged by means of received charging current from a charging station of a previously well-known kind, received through charging skids 156 or other suitable charging connectors. Solar cells can also be used for producing an electric charging current, and can be provided at the robotic lawnmower. This can be a complement to a charging station.

According to some aspects, the drive motor arrangement 150 is connected to the drive wheels 131, 132, where the other wheels 130 may be swivelable wheels 130 that are not connected to a motor. Then the drive motor arrangement 150 is adapted to drive the drive wheels 131, 132 in the same rotation direction, or in different rotation directions, and at different rotational velocities v_{1A}, v_{2A}; v_{1B}, v_{2B} in order to control the speed and direction of the robotic lawnmower's movement. According to some aspects, the drive motor arrangement 150 comprises two separate electrical motors, and according to some further aspects each such electric motor is mounted to a corresponding drive wheel 131, 132, for example in a corresponding drive wheel hub.

As illustrated in Figure 2A and Figure 2B, as an alternative, there may be one electric motor for each drive wheel 131, 132.

A first drive wheel 131 has a first wheel rotational velocity v_{1A} at one time and another first wheel rotational velocity v_{1B} at another time, where the rotational velocities v_{1A}, v_{1B} can have different magnitudes and/or different signs, where different signs of the rotational velocities v_{1A}, v_{1B} means that the first drive wheel 131 rotates in different directions. Correspondingly, a second drive wheel 132 has second wheel rotational velocities v_{2A}, v_{2B} such that a first set of drive wheel rotational velocities v_{1A}, v_{2A} can be formed for the drive wheels 131, 132 at a first time and a second set of drive wheel rotational velocities v_{1B}, v_{2B} can be formed for the drive wheels 131, 132 at a second time, where the sets of drive wheel rotational velocities v_{1A}, v_{2A}; v_{1B}, v_{2B} can be different from each other. In this manner, two or more sets of drive wheel rotational velocities v_{1A}, v_{2A}; v_{1B}, v_{2B} can be formed, each set of drive wheel rotational velocities v_{1A}, v_{2A}; v_{1B}, v_{2B} comprising simultaneous rotational velocities for the first drive wheel 131 and the second drive wheel 132.

There can be more than two drive wheels, and generally the robotic lawnmower 100 comprises at least two drive wheels 131, 132 that are drivably connected to a drive motor arrangement 150 that is used for driving the drive wheels 131, 132 at corresponding drive wheel velocities v_{1A}, v_{2A}; v_{1B}, v_{2B}, constituting a set of drive wheel rotational velocities v_{1A}, v_{2A}; v_{1B}, v_{2B}. There are thus different sets of drive wheel rotational velocities v_{1A}, v_{2A}; v_{1B}, v_{2B}, where there are sets of drive wheel rotational velocities that are mutually different from each other.

If there are two opposing drive wheels 131, 132 arranged along an axis A as illustrated in Figure 2B, for a particular set of drive wheel rotational velocities v_{1A}, v_{2A}; v_{1B}, v_{2B}, the first wheel rotational velocity v_{1A}, v_{1B} may be equal to the second wheel rotational velocity v_{2A}, v_{2B} such that the robotic lawnmower runs straight ahead in the forward travelling direction D. If the first wheel rotational velocity v_{1A}, v_{1B} differs from the second wheel rotational velocity v_{2A}, v_{2B}, the robotic lawnmower 100 turns, presenting a steering angle α relative the forward travelling direction D as illustrated in Figure 3. If the first wheel rotational velocity v_{1A}, v_{1B} and the second wheel rotational velocity v_{2A}, v_{2B} are equal but have different signs such that the drive wheels 131 run in different directions, the robotic lawnmower 100 will turn on the spot, performing a rotation.

In one embodiment, the robotic lawnmower 100 may further comprise at least one navigation sensor arrangement 175 of a previously known design. The robotic lawnmower 100 further comprises radar transceivers 170 adapted to transmit radar signal waveforms 180 and to receive reflected radar signal waveforms 181 that have been reflected by an object 182. To enable this, according to some aspects, each radar transceiver 170 comprises a corresponding transmitter arrangement and receiver arrangement together with other necessary circuitry in a well-known manner.

For this purpose, the control unit arrangement 110 is adapted to control the radar transceivers 170 to transmit a plurality of transmitted radar signal waveforms 180 and to receive a plurality of reflected radar signal waveforms 181 where the transmitted radar signal waveforms have been reflected by an object 182.

The control unit arrangement 110 is according to some aspects adapted to analyze information that has been acquired by means of the radar transceivers 170. The control unit arrangement 110 is further adapted to control the drive motor arrangement 150 of the robotic lawnmower 100, at least partly in dependence of the analyzed information, such that speed and direction of the robotic lawnmower 100 is controlled. Navigation sensor data may also be taken into account. The control unit arrangement 110 can be constituted by several separate control sub-units or one single integrated control unit. The control unit arrangement 110 is adapted to perform all necessary signal processing necessary for controlling the radar transceivers 170 and to acquire the desired information from the detected measurement results.

Radar transceivers can be used for detecting objects and obstacles in advance, preventing collisions to occur. Radar transceivers can also be used for detecting the ground in front of the robotic lawnmower such that characteristics of the ground in front of the robotic lawnmower can be determined, which will be discussed in the following.

According to some aspects, at least one radar transceiver 170 comprises a corresponding antenna arrangement 171 that is directed at an angle φ to a ground level G such that a transmitted radar signal 180 is directed at the angle φ to the ground level G.

With reference also to Figure 4 that shows a schematic detail side view of a radar transceiver 170 in the robotic lawnmower 100, each radar transceiver 170 comprises a corresponding antenna arrangement 171, and as shown in Figure 4, a transmitted radar signal 180 is directed at an incident angle φ to the ground level G, which corresponds to that a corresponding antenna beam has a pointing direction that is directed at the incident angle φ to the ground level G. According to some aspects, the incident angle φ lies in the interval 30°-50°, and more preferably in the interval 40°-50°.

In this manner, the control unit arrangement 110 is adapted to perform analysis of a received reflected signal 181 such that the current type of ground material can be determined. This can be achieved in many ways, and according to some aspects the control unit arrangement 110 is adapted to perform analysis of specific features of the generated power spectral densities over time for the received reflected signal 181. In this manner a current type of ground material can be determined, it can for example be determined whether the robotic lawnmower 100 is moving on grass or not.

During detection of the ground in front of the robotic lawnmower 100, the robotic lawnmower 100 may be travelling straight ahead in the forward travelling direction D, present a steering angle α relative the forward travelling direction D, or turn on the spot, performing a rotation. This all depends on which set of drive wheel rotational velocities v_{1A}, v_{2A}; v_{1B}, v_{2B} that is applied for the moment.

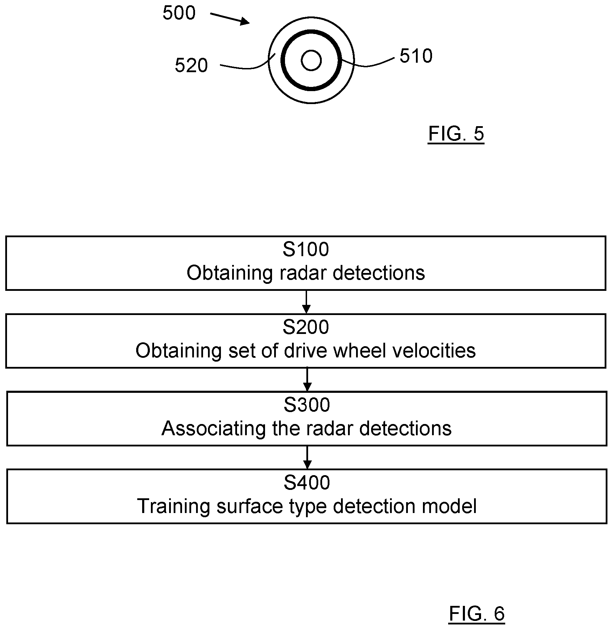

With reference also to Figure 6, the present disclosure relates to a computer-implemented method for providing at least two separate machine learning models, where each machine learning model constitutes a surface type detection model and is adapted to provide classifications regarding surface properties for a robotic lawnmower 100, suitably a robotic lawnmower comprising one or more features as described above. The robotic lawnmower 100 comprises at least two drive wheels 131, 132 that are drivably connected to a drive motor arrangement 150 that is used for driving the drive wheels 131, 132 at corresponding drive wheel velocities v_{1A}, v_{2A}; v_{1B}, v_{2B}, constituting a set of drive wheel rotational velocities v_{1A}, v_{2A}; v_{1B}, v_{2B}, as described above with reference to Figure 2B. The method comprises, for at least two different sets of drive wheel rotational velocities v_{1A}, v_{2A}; v_{1B}, v_{2B}, obtaining S100 radar detections 182 related to a surface G on which the robotic lawnmower 100 is intended to travel, and obtaining S200 a set of drive wheel rotational velocities v_{1A}, v_{2A}; v_{1B}, v_{2B}, associating S300 the radar detections 182 for the obtained set of drive wheel rotational velocities v_{1A}, v_{2A}; v_{1B}, v_{2B} with a certain type of surface, and training S400 a surface type detection model in a neural network using the associated radar detections 182 for the obtained set of drive wheel rotational velocities v_{1A}, v_{2A}; v_{1B}, v_{2B}. In this way, at least two surface type detection models are trained in the neural network, each surface type detection model being associated with a corresponding set of drive wheel rotational velocities v_{1A}, v_{2A}; v_{1B}, v_{2B}. The steps S100-S400 are thus repeated for each used set of drive wheel rotational velocities v_{1A}, v_{2A}; v_{1B}, v_{2B}.

For example, a first surface type detection model is associated with the first set of drive wheel rotational velocities v_{1A}, v_{2A}, and a second surface type detection model is associated with the second set of drive wheel rotational velocities v_{1B}, v_{2B}. There can of course be several surface type detection models where each one is associated with a particular set of drive wheel rotational velocities.

This means that several separate machine learning models in the form of surface type detection models are produced, one for each set of drive wheel rotational velocities v_{1A}, v_{2A}; v_{1B}, v_{2B}. This way, surface type detection can be performed by using an appropriate surface type detection model for a present set of drive wheel rotational velocities v_{1A}, v_{2A}; v_{1B}, v_{2B}. This also means that surface type detection can be performed for different sets of drive wheel rotational velocities v_{1A}, v_{2A}; v_{1B}, v_{2B}, which implies different robotic lawnmower speeds and turning angles, including the robotic lawnmower turning on the spot, performing a rotation.

By having several different surface type detection models, one for each set of drive wheel rotational velocities v_{1A}, v_{2A}; v_{1B}, v_{2B}, instead of one surface type detection model for all sets of drive wheel rotational velocities v_{1A}, v_{2A}; v_{1B}, v_{2B}, a higher degree of efficiency is obtained, the required computing resources needed being reduced. One such model easily becomes large in terms of model parameters and computational complexity which does not permit to run it effectively on a relatively uncomplicated MCU where memory and computational power resources are limited.

According to some aspects, the method comprises, for the at least two different sets of drive wheel rotational velocities v_{1A}, v_{2A}; v_{1B}, v_{2B}, obtaining a corresponding steering angle α relative a forward travelling direction D by detecting the respective rotational velocity of the drive wheels in each set of the sets of drive wheel rotational velocities v_{1A}, v_{2A}; v_{1B}, v_{2B}.

This means that the present steering angle α can be included in each surface type detection model, providing an enhanced degree of reliability.

According to some aspects, each surface type detection model is adapted to provide classifications regarding at least a type of surface that is grass, and another type of surface that is non-grass. According to some further aspects, each surface type detection model is adapted to provide classifications regarding at least a type of surface that is grass of at least two different length categories.

This means that the surface type detection models can provide classifications regarding many types of surfaces and grass properties.

According to some aspects, the surface type detection model is adapted to provide classifications regarding the type of travelling surface. In this way, decisions can be made regarding actions such as for example adjusting speed, cutting height and turning angles. The term ahead of the robotic lawnmower 100 may for example mean in its travelling direction, but other meanings are also possible, for example when the robotic lawnmower 100 presents a steering angle α relative the forward travelling direction D, or turns on the spot, performing a rotation.

This means that the robotic lawnmower 100 can turn on the spot while classifications regarding the type of travelling surface around itself are provided.

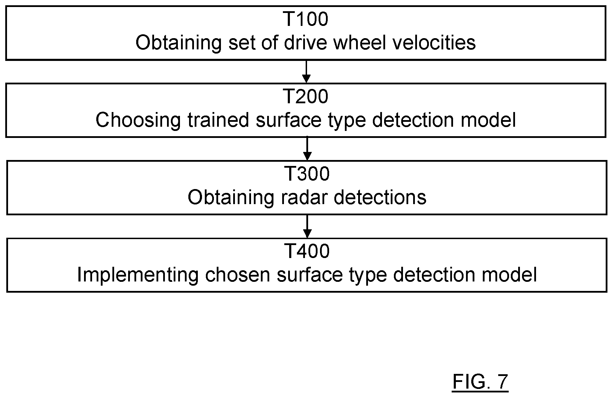

With reference also to Figure 7, the present disclosure also relates to a computer-implemented method for determining a type of travelling surface ahead of a robotic lawnmower 100, suitably a robotic lawnmower comprising one or more features as described above. The robotic lawnmower 100 comprises at least two drive wheels 131, 132 that are drivably connected to a drive motor arrangement 150 that is used for driving the drive wheels 131, 132 at corresponding drive wheel velocities v_{1A}, v_{2A}; v_{1B}, v_{2B}, constituting a set of drive wheel rotational velocities v_{1A}, v_{2A}; v_{1B}, v_{2B} as described above with reference to Figure 2B. The method comprises obtaining T100 a set of drive wheel rotational velocities v_{1A}, v_{2A}; v_{1B}, v_{2B} and choosing T200 that trained surface type detection model, trained in accordance with the computer-implemented method as described herein, that provides a best match to the obtained set of drive wheel rotational velocities.

This means that the present drive wheel velocities v_{1A}, v_{2A}; v_{1B}, v_{2B} are compared to the drive wheel velocities that are associated with the correspond trained surface type detection models, and chooses that surface type detection models which is associated with the most suitable or closest set of drive wheel rotational velocities.

The method further comprises obtaining T300 radar detections 182 related to the travelling surface ahead of the robotic lawnmower 100 and implementing T400 the chosen surface type detection model by using the obtained radar detections 151, 161, and outputting a predicted type of travelling surface ahead of a robotic lawnmower.

In this way, the most suitable surface type detection model is used with respect to the current drive wheel velocities v_{1A}, v_{2A}; v_{1B}, v_{2B}.

This means that the robotic lawnmower 100 can move at different speeds and directions, and even turn on the spot, while the type of travelling surface around the robotic lawnmower 100 is provided.

With reference also to Figure 7, the present disclosure also relates to a control unit arrangement 110 adapted to control at least one of the computer-implemented method for providing a surface type detection model as described herein and the computer-implemented method for determining a type of travelling surface ahead of a robotic lawnmower, as described herein.

The present disclosure also relates to a robotic lawnmower 100 comprising the control unit arrangement 110 as described herein. The robotic lawnmower suitably comprises one or more features as described above for a robotic lawnmower.

In Figure 2A it is schematically illustrated, in terms of a number of functional units, the components of the control unit arrangement 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry 115 thus comprises a plurality of digital logic components.

Particularly, the processing circuitry 115 is configured to cause the control unit arrangement 110 to perform a set of operations, or steps to control the operation of the robotic lawnmower 1 including, but not being limited to, controlling the radar transceivers 170, processing measurements results received via the radar transceivers 170, and the propulsion of the robotic lawnmower 100. For example, the storage medium 120 may store the set of operations, and the processing circuitry 115 may be configured to retrieve the set of operations from the storage medium 120 to cause the control unit arrangement 110 to perform the set of operations. The set of operations may be provided as a set of executable instructions. Thus, the processing circuitry 115 is thereby arranged to execute methods as herein disclosed.

The storage medium 120 may also comprise persistent storage, which, for example, can be any single one or combination of magnetic memory, optical memory, solid state memory or even remotely mounted memory.

According to some aspects, the control unit arrangement 110 further comprises an interface 113 for communications with at least one external device such as a control panel or an external device. As such the interface 113 may comprise one or more transmitters and receivers, comprising analogue and digital components and a suitable number of ports for wireline communication. The interface 113 can be adapted for communication with other devices, such as a remote server 243, a personal computer or smartphone, a charging station, and/or other robotic working tools. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as disclosed herein.

Figure 5 shows a computer program product 500 comprising computer executable instructions 510, such as computer program code 510, stored on media 520 to execute any of the methods disclosed herein.

With reference to Figure 5, the present disclosure also relates to a computer program product 500 comprising computer program code 510 which, when executed in a control unit arrangement 110, causes the control unit arrangement 110 to execute the methods for providing a surface type detection model as described herein.

The present disclosure also relates to a computer program product 500 comprising computer program code 510 which, when executed in a control unit arrangement 110, causes the control unit arrangement 110 to execute the methods for determining a type of travelling surface ahead of a robotic lawnmower as described herein.

The control unit arrangement 110 can be arranged to communicate 241 with a cellular communication system 240, for example via the interface 113. This communication system may, e.g., be a third generation partnership program (3GPP) defined access network like the fourth generation (4G) or the fifth generation (5G) access networks. The access network may provide access to remote networks and other resources such as, e.g., the Internet 242.

It is also appreciated that some processing functions may be performed by resources in a remote network 242, such as the remote server 243. Thus, functions of control unit arrangement 110 may be performed remotely on, e.g., the remote server 243.The remote server 243 may then form or be a part of the control unit arrangement 110, 243.

The present disclosure also relates to a computer program 510 comprising computer program code which, when executed in a control unit arrangement 110, causes the control unit arrangement 110 to execute the method for determining a type of travelling surface ahead of a robotic lawnmower, as described herein.

According to some aspects, the present disclosure enables acquiring radar data recordings from different surfaces at several different lawnmower speeds. This data is then used to train several machine-learning models, each of which specialized for a specific speed. By checking which lawn mower speed and heading that currently is used by detecting drive wheel velocities v_{1A}, v_{2A}; v_{1B}, v_{2B}, the most optimal machine-learning model can be chosen for performing surface classification.

According to some aspects, the present disclosure also enables surface to be classified with good accuracy also when the robotic lawnmower 100 is not moving straight, even when the robotic lawnmower 100 is rotating on the spot. This rotation can of course be performed at different speeds and hence requires machine-learning models tailored to the different rotational speeds. The need for good machine-learning model accuracy during rotation stems from the need to be able to search for grass on the spot once the robotic lawnmower 100 has stopped due to not detecting grass anymore. The rotation on the spot will give possibilities to scan the closest surroundings for grass and thus finding a suitable direction for continuation of its operation.

Reversing, accelerating and turning might be other types of movements which might benefit from specialized machine-learning models.

The present disclosure is not limited to the above, but may vary freely within the scope of the appended claims. For example, the drive wheels 131, 132 may be adapted to run on a surface G on which the robotic lawnmower in its travelling, or alternatively drive other propulsion means such as for example caterpillar belts and the like.

According to some aspects, there may be a plurality of predefined drive wheel rotational velocities v_{1A}, v_{2A}; v_{1B}, v_{2B} that for example are stored in the control unit arrangement 110 and applied when controlling drive motor arrangement 150 in order to control the movement of the robotic lawnmower 100 in a desired manner. Such a control may for example be performed at least partly in dependence of analyzed information from the radar transceivers 170 and other possible environmental detectors such as Lidar, ultrasound and the like, and other sensors such as navigation sensor arrangements and boundary wire sensors.

## Claims

1. A computer-implemented method for providing at least two separate machine learning models, where each machine learning model constitutes a surface type detection model and is adapted to provide classifications regarding surface properties for a robotic lawnmower (100) comprising at least two drive wheels (131, 132) that are drivably connected to a drive motor arrangement (150) that is used for driving the drive wheels (131, 132) at corresponding drive wheel velocities (v_{1A}, v_{2A}; v_{1B}, v_{2B}), constituting a set of drive wheel rotational velocities (v_{1A}, v_{2A}; v_{1B}, v_{2B}), the method comprising, for at least two different sets of drive wheel rotational velocities (v_{1A}, v_{2A}; v_{1B}, v_{2B});
obtaining (S100) radar detections (182) related to a surface (G) on which the robotic lawnmower (100) is intended to travel;
obtaining (S200) a set of drive wheel rotational velocities (v_{1A}, v_{2A}; v_{1B}, V2B);
associating (S300) the radar detections (182) for the obtained set of drive wheel rotational velocities (v_{1A}, v_{2A}; v_{1B}, v_{2B}) with a certain type of surface; and
training (S400) a surface type detection model in a neural network using the associated radar detections (182) for the obtained set of drive wheel rotational velocities (v_{1A}, v_{2A}; v_{1B}, v_{2B});
such that at least two surface type detection models are trained in the neural network, each surface type detection model being associated with a corresponding set of drive wheel rotational velocities (v_{1A}, v_{2A}; v_{1B}, v_{2B}).

2. The computer-implemented method according to claim 1, wherein the method comprises, for the at least two different sets of drive wheel rotational velocities (v_{1A}, v_{2A}; v_{1B}, v_{2B}), obtaining a corresponding steering angle (α) relative a forward travelling direction (D) by detecting the respective rotational velocity of the drive wheels in each set of the sets of drive wheel rotational velocities (v_{1A}, v_{2A}; v_{1B}, v_{2B}).

3. The computer-implemented method according to any one of the claims 1 or 2, wherein each surface type detection model is adapted to provide classifications regarding at least a type of surface that is grass, and another type of surface that is non-grass.

4. The computer-implemented method according to claim 3, wherein each surface type detection model is adapted to provide classifications regarding at least a type of surface that is grass of at least two different length categories.

5. The computer-implemented method according to any one of the previous claims, wherein the surface type detection model is adapted to provide classifications regarding the type of travelling surface ahead of a robotic lawnmower (100).

6. A computer-implemented method for determining a type of travelling surface ahead of a robotic lawnmower (100), the robotic lawnmower (100) comprising at least two drive wheels (131, 132) that are drivably connected to a drive motor arrangement (150) that is used for driving the drive wheels (131, 132) at corresponding drive wheel velocities (v_{1A}, v_{2A}; v_{1B}, v_{2B}), constituting a set of drive wheel rotational velocities (v_{1A}, v_{2A}; v_{1B}, v_{2B}), the method comprising
obtaining (T100) a set of drive wheel rotational velocities (v_{1A}, v_{2A}; v_{1B}, v_{2B});
choosing (T200) that trained surface type detection model, trained in accordance with the computer-implemented method according to any one of the previous claims, that provides a best match to the obtained set of drive wheel rotational velocities (v_{1A}, v_{2A}; v_{1B}, v_{2B});
obtaining (T300) radar detections (182) related to the travelling surface ahead of the robotic lawnmower (100);
wherein the computer-implemented method comprises
implementing (T400) the chosen surface type detection model by using the obtained radar detections (151, 161), and outputting a predicted type of travelling surface ahead of a robotic lawnmower (100).

7. A control unit arrangement (110, 243) adapted to control at least one of the computer-implemented method for providing a surface type detection model according to any one of the claims 1-5 and the computer-implemented method for determining a type of travelling surface ahead of a robotic lawnmower, according to claim 6.

8. A robotic lawnmower (100) comprising the control unit arrangement (110, 243) according to claim 7.

9. A computer program product (500) comprising computer program code (510) which, when executed in a control unit arrangement (110, 243), causes the control unit arrangement (110, 243) to execute the method for providing a surface type detection model according to any one of the claims 1-5.

10. A computer program product (500) comprising computer program code (510) which, when executed in a control unit arrangement (110, 243), causes the control unit arrangement (110, 243) to execute the method for determining a type of travelling surface ahead of a robotic lawnmower, according to claim 6.
